# EUROPEAN PATENT APPLICATION

(11) **EP 3 819 052 A1**
(43) Date of publication of application: **12.05.2021**
(21) Application number: 19936358.1
(22) Date of filing: 25.02.2020
(51) Int. Cl.: B23B 31/12

(54) **ANTI-LOOSENING LOCKING DRILL CHUCK**

(30) Priority: 02.07.2019 CN 201910588773
(71) Applicant: Roehm Weida Machinery (Shandong) Co., Ltd, Weihai, Shandong 264200 (CN); Shandong Weida Machinery Co., Ltd., Weihai, Shandong 264200 (CN)
(72) Inventor: WEI, Ningbo, Weiahi, Shandong 264200 (CN); SONG, Kai, Weiahi, Shandong 264200 (CN); YU, Chengyin, Weiahi, Shandong 264200 (CN)
(74) Representative: Lösch, Christoph Ludwig Klaus
(86) International application number: PCT/CN2019/129960
(87) International publication number: WO 2021/000550

(57) **Abstract**

The present invention relates to the technical field of drill chuck mechanical manufacturing, specifically to an anti-loosening locking drill chuck, including a drill body, a clamping jaw, a nut, a front sleeve, and a rear sleeve, wherein an anti-loosening locking assembly is provided between the nut and the drill body; the anti-loosing locking assembly consists of a nut sleeve, a bushing, a ratchet wheel, and an elastic piece; the ratchet wheel is sleeved on the outer side of the drill body and is connected with the drill body; the outer side of the ratchet wheel is sleeved with the nut sleeve, and the nut sleeve is provided with one locking hole and at least two clamping holes. By rotating the front sleeve and then driving the bushing to rotate so that an elastic piece protrusion enters into a bushing auxiliary groove via a bushing groove, a pawl is separated from the bushing groove and is clamped tightly with the ratchet wheel to realize anti-loosening and locking functions. The drill chuck has the advantages of a simple structure and effectively improving a locking torque so that a lock is not loosened and does not fail when the drill chuck works.

## Description

### TECHNICAL FIELD

The present invention relates to the technical field of drill chuck mechanical manufacturing, specifically to an anti-loosening locking drill chuck with a simple structure and the effective improvement of a locking torque so that a lock is not loosened and does not fail when the drill chuck works.

### TECHNICAL BACKGROUND

As we all know, currently, a power tool tends to be developed to be a portable chargeable power tool. This type of DC electric drill is different from an AC electric drill. There is an emergency stop phenomenon, that is, when a switch of the electric drill is released, a motor will immediately stop rotating. At this time, the drill chuck on the electric drill also stops rotating immediately with a main shaft of the electric drill, and a housing on the electric drill generates rotational inertial momentum immediately. This inertia time is in a direction where the drill chuck is released. Therefore, when a locking torque is less than this inertial force, a lock is released and the drill chuck loses a self-locking function. As the number of emergency stops increases, the drill chuck loosens a drill tool, causing the drill tool to fail to work, and a tool can be used only when the drill chuck is clamped again. In addition, the chargeable power tool has a clutch vibration function. The clutch vibration function and the inertia torque generated by the emergency stop of the electric drill increases the chuck's loosening ability and the drill chuck is easier to loosen.

### SUMMARY OF THE INVENTION

The objective of the present invention is to solve the above-mentioned shortcomings in the prior art, to provide an anti-loosening locking drill chuck with a simple structure and the effective improvement of a locking torque so that a lock is not loosened and does not fail when the drill chuck works.

The technical solution adopted by the present invention to solve the technical problems thereof are as follows:
An anti-loosening locking drill chuck comprises a drill body, a clamping jaw, a nut, a front sleeve, and a rear sleeve, wherein the three clamping jaws are mounted in three equally divided inclined holes of the drill body, respectively. The nut is mounted in a nut groove on the side of the drill body. The front sleeve fixes the nut. The nut and the thread of the clamping jaw form a threaded transmission mechanism. The front sleeve is fixedly connected with the nut. The front end of the rear sleeve cooperates with and is rotatably connected with the front sleeve. The rear end of the rear sleeve is fixedly connected with the drill body. The rear of the drill body is provided with a threaded hole. An anti-loosening locking assembly is provided between the nut and the drill body. The anti-loosing locking assembly consists of a nut sleeve, a bushing, a ratchet wheel and an elastic piece. The ratchet wheel is sleeved on the outer side of the drill body and connected with the drill body. The outer side of the ratchet wheel is sleeved with the nut sleeve. The nut sleeve is provided with a locking hole and at least two clamping holes thereon. The nut sleeve is sleeved on the outer side of the ratchet wheel and fixedly connected with the nut. The outer side of the nut sleeve is provided with the bushing. The inner side of the bushing is in contact with the nut sleeve. The outer side of the bushing is fixedly connected with the front sleeve. The bushing is provided with a bushing groove corresponding to the positions of the locking hole and the clamping hole thereon. A bushing auxiliary groove is provided on the bushing at one side of the bushing groove corresponding to the position of the clamping hole in a direction of a pawl. An arc-shaped elastic piece with a gap is provided between the nut sleeve and the ratchet wheel. One end of the elastic piece is provided with the pawl that is bent inward. The pawl cooperates with ratchet teeth on the ratchet wheel. The arc-shaped elastic piece is provided with an elastic piece protrusion that cooperates with the locking hole on the nut sleeve and the clamping hole on the nut sleeve. The elastic piece protrusion passes through the nut sleeve and cooperates with the bushing groove provided on the bushing. By rotating the front sleeve and then driving the bushing to rotate so that the elastic piece protrusion enters the bushing auxiliary groove via the bushing groove, the pawl is separated from the bushing groove and is clamped tightly with the ratchet wheel to realize anti-loosening and locking functions.

For the present invention, the elastic piece between the adjacent elastic piece protrusions consists of an arc-shaped piece and a straight-shaped piece. The arc-shape piece is raised outward to be in contact with the nut sleeve. Both ends of the arc-shaped piece are connected with the straight-shaped piece, respectively. The straight-shaped piece is connected with the elastic piece protrusion, and the deformation force is increased by the cooperation of the arc-shaped piece and the straight-shaped piece, thereby increasing an anti-loosening torque.

For the present invention, the front sleeve and the bushing are set as an integral structure, and the bushing groove and the bushing auxiliary groove are directly provided on the bushing and the front sleeve.

For the present invention, the elastic piece consists of a locking elastic piece and an anti-loosing elastic piece. The end of the locking elastic piece is provided with the pawl. The locking elastic piece on the side of the pawl is provided with at least two elastic piece protrusion thereon. The elastic piece protrusion is correspondingly provided with the locking hole and an anti-loosing hole on the nut sleeve. Both ends of the anti-loosing elastic piece are provided with a clamping block protruding to the outside. The middle of the anti-loosening elastic piece is provided with the elastic piece protrusion. The nut sleeve is provided with a clamping hole and the anti-loosing hole thereon that cooperate with the clamping block and the elastic piece protrusion. The bushing is provided with the bushing groove corresponding to the elastic piece protrusion. The bushing auxiliary groove is provided on the bushing at one side of the bushing groove in a direction of the pawl, and the cooperative action of the locking elastic piece and the anti-loosening elastic piece realizes the anti-loosening and the locking functions.

For the present invention, the inner surface of the bushing between the bushing groove and the bushing auxiliary groove is provided with a wear-resistant metal sheet. The service life of the bushing is increased by the wear-resistant metal sheet and the bushing is prevented from being worn.

For the present invention, the ratchet wheel is provided on the front side or the rear side of the nut, which is convenient for installation.

For the present invention, since the anti-loosening locking assembly is provided between the nut and the drill body, the anti-loosing locking assembly consists of the nut sleeve, the bushing, the ratchet wheel and the elastic piece. The ratchet wheel is sleeved on the outer side of the drill body and connected with the drill body. The outer side of the ratchet wheel is sleeved with the nut sleeve. The nut sleeve is provided with a locking hole and at least two clamping holes thereon. The nut sleeve is sleeved on the outer side of the ratchet wheel and fixedly connected with the nut. The outer side of the nut sleeve is provided with the bushing. The inner side of the bushing is in contact with the nut sleeve. The outer side of the bushing is fixedly connected with the front sleeve. The bushing is provided with a bushing groove corresponding to the positions of the locking hole and the clamping hole thereon. A bushing auxiliary groove is provided on the bushing at one side of the bushing groove corresponding to the position of the clamping hole in a direction of a pawl. An arc-shaped elastic piece with a gap is provided between the nut sleeve and the ratchet wheel. One end of the elastic piece is provided with the pawl that is bent inward. The pawl cooperates with ratchet teeth on the ratchet wheel. The arc-shaped elastic piece is provided with elastic piece protrusion that cooperates with the locking hole on the nut sleeve and the clamping hole on the nut sleeve. The elastic piece protrusion passes through the nut sleeve and cooperates with the bushing groove provided on the bushing. By rotating the front sleeve and then driving the bushing to rotate so that the elastic piece protrusion enters the bushing auxiliary groove via the bushing groove, the pawl is separated from the bushing groove and is clamped tightly with the ratchet wheel to realize anti-loosening and locking functions. The elastic piece between the adjacent elastic piece protrusions consists of an arc-shaped piece and a straight-shaped piece. The arc-shape piece is raised outward to be in contact with the nut sleeve. Both ends of the arc-shaped piece are connected with the straight-shaped piece, respectively. The straight-shaped piece is connected with the elastic piece protrusion. The deformation force is increased by the cooperation of the arc-shaped piece and the straight-shaped piece, thereby increasing an anti-loosening torque. The front sleeve and the bushing are set as an integral structure. The bushing groove and the bushing auxiliary groove are directly provided on the bushing and the front sleeve. The elastic piece consists of a locking elastic piece and an anti-loosing elastic piece. The end of the locking elastic piece is provided with the pawl. The locking elastic piece on the side of the pawl is provided with at least two elastic piece protrusions thereon. The elastic piece protrusion is correspondingly provided with the locking hole and an anti-loosing hole on the nut sleeve. Both ends of the anti-loosing elastic piece are provided with a clamping block protruding to the outside. The middle of the anti-loosening elastic piece is provided with the elastic piece protrusion. The nut sleeve is provided with a clamping hole and the anti-loosing hole thereon that cooperate with the clamping block and the elastic piece protrusion. The bushing is provided with the bushing groove corresponding to the elastic piece protrusion. The bushing auxiliary groove is provided on the bushing at one side of the bushing groove in a direction of the pawl. The cooperative action of the locking elastic piece and the anti-loosening elastic piece realizes the anti-loosening and the locking functions. The inner surface of the bushing between the bushing groove and the bushing auxiliary groove is provided with a wear-resistant metal sheet. The service life of the bushing is increased by the wear-resistant metal sheet and the bushing is prevented from being worn. The ratchet wheel is provided on the front side or the rear side of the nut. The drill chuck has the advantages of convenient installation, a simple structure and the effective improvement of a locking torque so that a lock is not loosened and does not fail when the drill chuck works.

### BRIEF DESCRIPTION OF THE DRAWINGS

FIG. 1 is a structural view of the present invention.
FIG. 2 is a top view of FIG. 1, wherein FIG. 2-1 is a view of a released state, and FIG. 2-2 is a view of a locked state.
FIG. 3 is a structural view of an elastic piece in FIG. 1, wherein FIG. 3-1 is a structural view of a first type of elastic piece, and FIG. 3-2 is a structural view of a second type of elastic piece.
FIG. 4 is a structural view of a nut sleeve cooperating with an elastic piece in FIG. 3, wherein FIG. 4-1 is a view of a nut sleeve cooperating with FIG 3-1, and FIG. 4-2 is a view of a nut sleeve cooperating with FIG. 3-2.
FIG. 5 is a structural view of a bushing in FIG. 1.
FIG. 6 is a structural view of another elastic piece in the present invention.
FIG. 7 is a structural view of a nut sleeve cooperating with an elastic sheet in FIG. 6.
FIG. 8 is an assembly view of FIGS. 6 and 7.
FIG. 9 is a top view of a drill chuck in an embodiment of the present invention, wherein FIG. 9-1 is a view of a free state, FIG. 9-2 is a view of a locked state, and FIG. 9-3 is a relationship view of an arc-shaped piece and a straight-shaped piece in a locked state.
FIG. 10 is a view of a position relationship between a nut and a ratchet wheel in the present invention, wherein FIG. 10-1 is a view of a first position relationship, FIG. 10-2 is a view of a second position relationship, and FIG. 10-3 is a view of a third position relationship.

### DETAILED DESCRIPTION OF THE PRESENTLY PREFERRED EMBODIMENTS

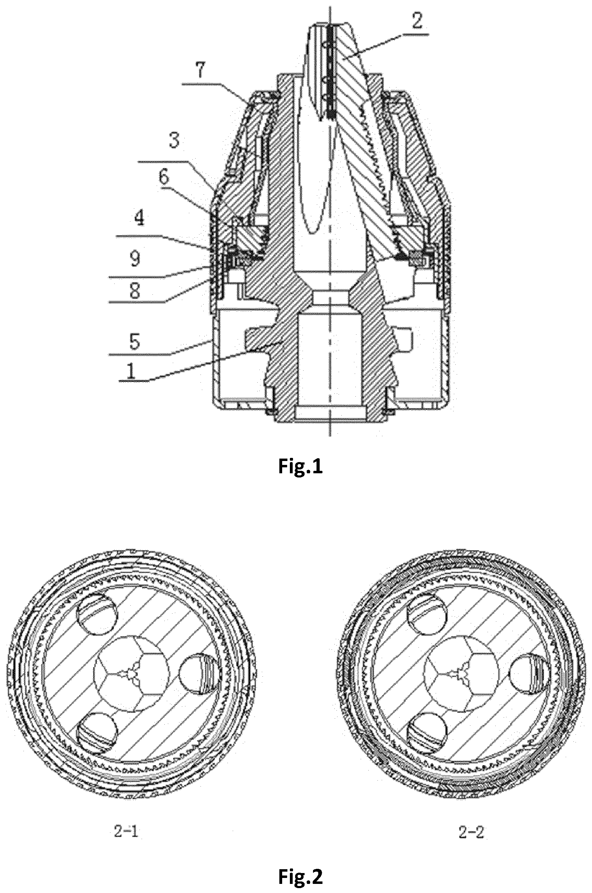

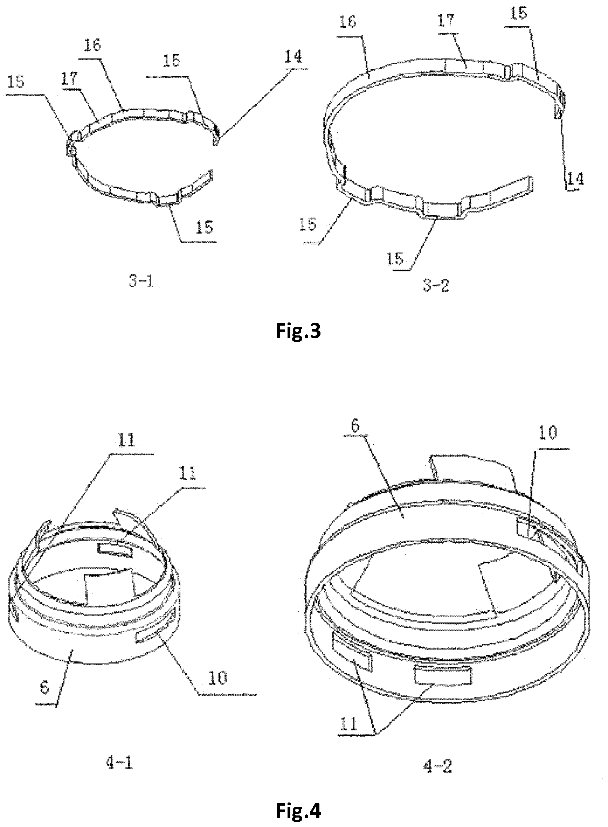

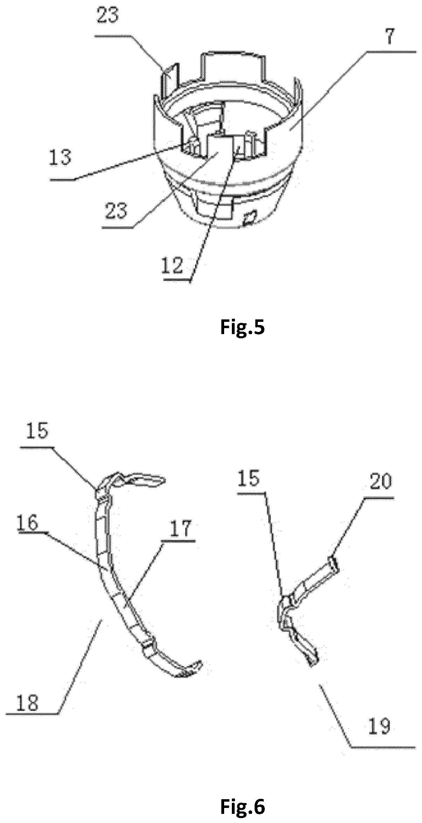

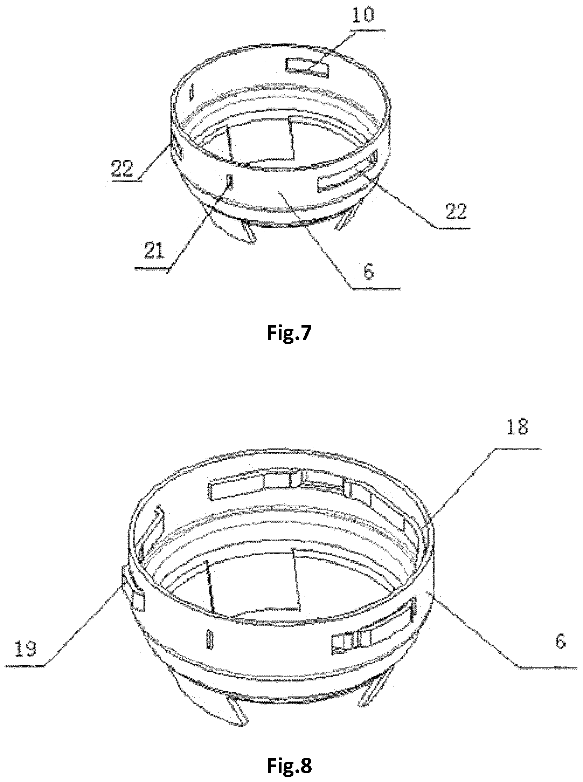

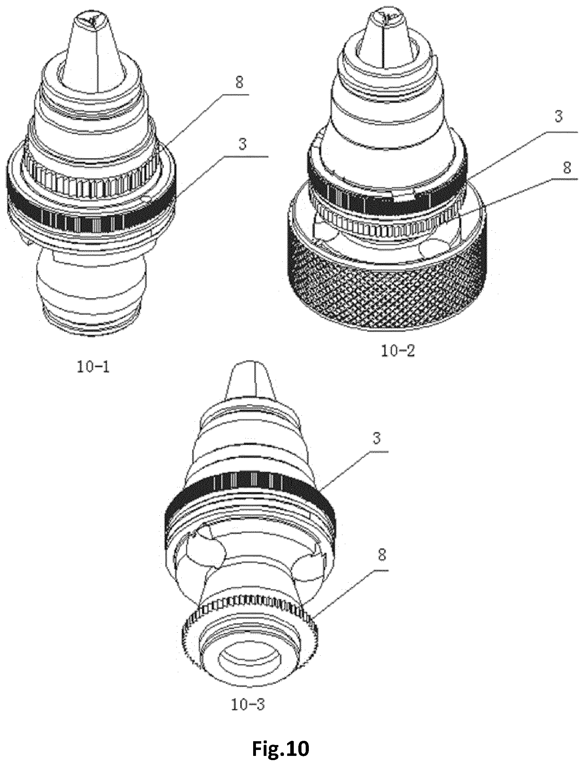

The present invention will be further described below in conjunction with the drawings:
As shown in FIGS. 1-8, an anti-loosening locking drill chuck comprises a drill body 1, a clamping jaw 2, a nut 3, a front sleeve 4, and a rear sleeve 5, wherein the three clamping jaws 2 are mounted in three equally divided inclined holes of the drill body 1, respectively. The nut 3 is mounted in a nut groove on the side of the drill body 1. The front sleeve 4 fixes the nut 3. The nut 3 and the thread of the clamping jaw 2 form a threaded transmission mechanism. The front sleeve 4 is fixedly connected with the nut 3. The front end of the rear sleeve 5 cooperates with and is rotatably connected with the front sleeve 4. The rear end of the rear sleeve 5 is fixedly connected with the drill body 1. The rear of the drill body 1 is provided with a threaded hole. An anti-loosening locking assembly is provided between the nut 3 and the drill body 1. The anti-loosing locking assembly consists of a nut sleeve 6, a bushing 7, a ratchet wheel 8 and an elastic piece 9. The ratchet wheel 8 is sleeved on the outer side of the drill body 1 and connected with the drill body 1. The outer side of the ratchet wheel 8 is sleeved with the nut sleeve 6. The nut sleeve 6 is provided with a locking hole 10 and at least two clamping holes 11 thereon. The nut sleeve 6 is sleeved on the outer side of the ratchet wheel 8 and fixedly connected with the nut 3. The outer side of the nut sleeve 6 is provided with the bushing 7. The inner side of the bushing 7 is in contact with the nut sleeve 6. The outer side of the bushing 7 is fixedly connected with the front sleeve 4. The bushing 7 is provided with a bushing groove 12 corresponding to the positions of the locking hole 10 and the clamping hole 11 thereon. A bushing auxiliary groove 13 is provided on the bushing 7 at one side of the bushing groove 12 corresponding to the position of the clamping hole 11 in a direction of a pawl. An arc-shaped elastic piece 9 with a gap is provided between the nut sleeve 6 and the ratchet wheel 8. One end of the elastic piece 9 is provided with the pawl 14 that is bent inward. The pawl 14 cooperates with ratchet teeth on the ratchet wheel 8. The arc-shaped elastic piece 9 is provided with an elastic piece protrusion 15 that cooperates with the locking hole 10 on the nut sleeve 6 and the clamping hole 11 on the nut sleeve 6. The elastic piece protrusion 15 passes through the nut sleeve 6 and cooperates with the bushing groove 12 provided on the bushing 7. By rotating the front sleeve 4 and then driving the bushing 7 to rotate so that the elastic piece protrusion 15 enters the bushing auxiliary groove 13 via the bushing groove 12, the pawl 14 is separated from the bushing groove 12 and is clamped tightly with the ratchet wheel to realize anti-loosening and locking functions. The elastic piece 9 between the adjacent elastic piece protrusions 15 consists of an arc-shaped piece 16 and a straight-shaped piece 17. The arc-shape piece 16 is raised outward to be in contact with the nut sleeve 6. Both ends of the arc-shaped piece 16 are connected with the straight-shaped piece 17, respectively. The straight-shaped piece 17 is connected with the elastic piece protrusion 15. The deformation force is increased by the cooperation of the arc-shaped piece 16 and the straight-shaped piece 17, thereby increasing an anti-loosening torque. The front sleeve 4 and the bushing 7 are set as an integral structure. The bushing groove 12 and the bushing auxiliary groove 13 are directly provided on the bushing 7 and the front sleeve 4. The elastic piece 9 consists of a locking elastic piece 18 and an anti-loosing elastic piece 19. The end of the locking elastic piece 18 is provided with the pawl 14. The locking elastic piece 18 on the side of the pawl 14 is provided with at least two elastic piece protrusions 15 thereon. The elastic piece protrusion is correspondingly provided with the locking hole 10 and an anti-loosing hole 22 on the nut sleeve 6. Both ends of the anti-loosing elastic piece 19 are provided with a clamping block 20 protruding to the outside. The middle of the anti-loosening elastic piece 19 is provided with the elastic piece protrusion 15. The nut sleeve 6 is provided with a clamping hole 21 and the anti-loosing hole 22 thereon that cooperate with the clamping block 20 and the elastic piece protrusion 15. The bushing 7 is provided with the bushing groove 12 corresponding to the elastic piece protrusion 15. The bushing auxiliary groove 13 is provided on the bushing 7 at one side of the bushing groove 12 in a direction of the pawl 14. The cooperative action of the locking elastic piece 18 and the anti-loosening elastic piece 19 realizes the anti-loosening and the locking functions. The inner surface of the bushing 7 between the bushing groove 12 and the bushing auxiliary groove 13 is provided with a wear-resistant metal sheet 23. The service life of the bushing 7 is increased by the wear-resistant metal sheet 7 and the bushing 7 is prevented from being worn. The ratchet wheel 8 is provided on the front side or the rear side of the nut 3 (FIG. 10), which is convenient for installation.

### Embodiment

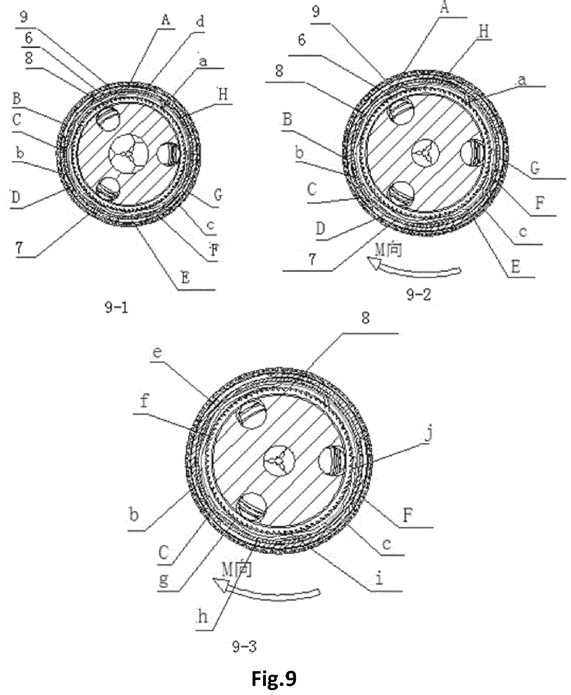

The working principle of the present invention is shown in the figures (Figure 9): When a drill chuck clamps a drill tool, the front sleeve of the drill chuck is rotated. The front sleeve drives a bushing to rotate. There is a bushing partition between a bushing groove and a bushing auxiliary groove on the bushing. The bushing partition C and the bushing partition F on the bushing drive an elastic piece protrusion b and an elastic piece protrusion c to rotate. Since the elastic piece protrusion b and the elastic piece protrusion c are mounted in two clamping holes of a nut sleeve, an elastic piece drives the nut sleeve to rotate. A nut is fixedly connected with the nut sleeve, that is, the nut is driven to rotate. The nut and a clamping jaw are threaded and meshed for connection. The rotation of the nut drives the clamping jaw to move forward and backward in a hole of a drill body. The clamping jaws move back and forth, that is, clamping or unclamping the drill tool. When the clamping jaw clamps the drill tool, the clamping jaw stops moving, which prevents the nut from rotating. Through the above-mentioned connection relationship, the elastic piece protrusion b and the elastic piece protrusion c prevent the bushing partition C and the bushing partition F to rotate. When a large external force is applied, the bushing partition C and the bushing partition F force the elastic piece protrusion b and the elastic piece protrusion c to deform. The bushing partition C and the bushing partition F go beyond the elastic piece protrusion b and elastic piece protrusion c. At this time, the elastic piece protrusion b moves from a bushing groove D to a bushing auxiliary groove B, and the elastic piece protrusion c moves from a bushing groove G to a bushing auxiliary groove E. At the same time, an elastic piece protrusion d moves to the position of the bushing H, and the bushing H presses the elastic piece protrusion d, so that an elastic piece pawl a engages with ratchet teeth on a ratchet wheel. This process is a locking process.

When the electric drill is working and has emergency stop action, and when the front sleeve generates a rotational torque in a loosening direction M, the bushing partition C and the bushing partition F press the elastic sheet protrusion b and the elastic sheet protrusion c to deform. The deformation force of the elastic sheet protrusion b and the elastic piece protrusion c prevents the bushing partition C and the bushing partition F from moving in the direction M. When the force of the bushing partition C and the bushing partition F in the direction M is greater than the deformation force of the elastic piece protrusion, the elastic piece protrusion b and the elastic piece protrusion c go beyond the bushing partition C and the bushing partition F. The elastic piece protrusion b moves from the bushing auxiliary groove B to the bushing groove D. The elastic piece protrusion c moves from a bushing auxiliary groove E to a bushing groove G. The largest deformation force of the elastic piece protrusion is an unlocking torque;

When the bushing partition C presses the elastic piece protrusion b to force the elastic piece to deform, an arc-shaped piece on the elastic piece is set as an elastic piece arc, and a straight-shaped piece is set as an elastic piece fulcrum. The elastic piece protrusion b takes the elastic piece arc e and elastic piece arc h as fulcrums to move toward the center of a circle to deform. Since there is a certain gap between the elastic piece fulcrum f and the elastic piece fulcrum g as well as the ratchet wheel, when the gap disappears due to the deformation of the elastic piece protrusion b, the elastic piece fulcrum f and the elastic piece fulcrum g are in contact with the ratchet wheel. When the bushing partition C continues to squeeze the elastic piece protrusion b, the elastic piece protrusion b forces the elastic piece to take the elastic piece fulcrum f and the elastic piece fulcrum g as the fulcrums and deform radially. Due to the deformation of the elastic piece, the fulcrum becomes from the elastic piece arc e and the elastic piece arc h to the elastic piece fulcrum f and elastic piece fulcrum g. The arm of force of the elastic deformation of the elastic piece is shortened, and the generated deformation force of the elastic piece is increased. At this time, the elastic piece protrusion b produces a larger deformation force. Similarly, the elastic piece protrusion c also increases the deformation force due to the change of the arm of force of deformation. The increased deformation force is the increased anti-loosening torque. The drill chuck has the advantages of a simple structure and the effective improvement of a locking torque so that a lock is not loosened and does not fail when the drill chuck works.

## Claims

1. An anti-loosening locking drill chuck, comprising a drill body, a clamping jaw, a nut, a front sleeve, and a rear sleeve, wherein the three clamping jaws are mounted in three equally divided inclined holes of the drill body, respectively, the nut is mounted in a nut groove on the side of the drill body, the front sleeve fixes the nut, the nut and the thread of the clamping jaw form a threaded transmission mechanism, the front sleeve is fixedly connected with the nut, the front end of the rear sleeve cooperates with and is rotatably connected with the front sleeve, the rear end of the rear sleeve is fixedly connected with the drill body, the rear of the drill body is provided with a threaded hole, an anti-loosening locking assembly is provided between the nut and the drill body, the anti-loosing locking assembly consists of a nut sleeve, a bushing, a ratchet wheel and an elastic piece, the ratchet wheel is sleeved on the outer side of the drill body and connected with the drill body, the outer side of the ratchet wheel is sleeved with the nut sleeve, the nut sleeve is provided with a locking hole and at least two clamping holes thereon, the nut sleeve is sleeved on the outer side of the ratchet wheel and fixedly connected with the nut, the outer side of the nut sleeve is provided with the bushing, the inner side of the bushing is in contact with the nut sleeve, the outer side of the bushing is fixedly connected with the front sleeve, the bushing is provided with a bushing groove corresponding to the positions of the locking hole and the clamping hole thereon, a bushing auxiliary groove is provided on the bushing at one side of the bushing groove corresponding to the position of the clamping hole in a direction of a pawl, an arc-shaped elastic piece with a gap is provided between the nut sleeve and the ratchet wheel, one end of the elastic piece is provided with the pawl that is bent inward, the pawl cooperates with ratchet teeth on the ratchet wheel, the arc-shaped elastic piece is provided with an elastic piece protrusion that cooperates with the locking hole on the nut sleeve and the clamping hole on the nut sleeve, the elastic piece protrusion passes through the nut sleeve and cooperates with the bushing groove provided on the bushing, by rotating the front sleeve and then driving the bushing to rotate so that the elastic piece protrusion enters the bushing auxiliary groove via the bushing groove, the pawl is separated from the bushing groove and is clamped tightly with the ratchet wheel to realize anti-loosening and locking functions.

2. The anti-loosening locking drill chuck according to claim 1, wherein the elastic piece consists of a locking elastic piece and an anti-loosing elastic piece, the end of the locking elastic piece is provided with the pawl, the locking elastic piece on the side of the pawl is provided with at least two elastic piece protrusion thereon, the elastic piece protrusion is correspondingly provided with the locking hole and an anti-loosing hole on the nut sleeve, both ends of the anti-loosing elastic piece are provided with a clamping block protruding to the outside, the middle of the anti-loosening elastic piece is provided with the elastic piece protrusion, the nut sleeve is provided with a clamping hole and the anti-loosing hole thereon that cooperate with the clamping block and the elastic piece protrusion, the bushing is provided with the bushing groove corresponding to the elastic piece protrusion, the bushing auxiliary groove is provided on the bushing at one side of the bushing groove in a direction of the pawl, and the cooperative action of the locking elastic piece and the anti-loosening elastic piece realizes the anti-loosening and the locking functions.

3. The anti-loosening locking drill chuck according to claim 1 or 2, wherein the elastic piece between the adjacent elastic piece protrusions consists of an arc-shaped piece and a straight-shaped piece, and the arc-shape piece is raised outward to be in contact with the nut sleeve, both ends of the arc-shaped piece are connected with the straight-shaped piece, respectively, the straight-shaped piece is connected with the elastic piece protrusion, and the deformation force is increased by the cooperation of the arc-shaped piece and the straight-shaped piece, thereby increasing an anti-loosening torque.

4. The anti-loosening locking drill chuck according to claim 1 or 2, wherein the front sleeve and the bushing are set as an integral structure, and the bushing groove and the bushing auxiliary groove are directly provided on the bushing and the front sleeve.

5. The anti-loosening locking drill chuck according to claim 1 or 2, wherein the inner surface of the bushing between the bushing groove and the bushing auxiliary groove is provided with a wear-resistant metal sheet, the service life of the bushing is increased by the wear-resistant metal sheet.

6. The anti-loosening locking drill chuck according to claim 1 or 2, wherein the ratchet wheel is provided on the front side or the rear side of the nut.
